# EUROPÄISCHE PATENTANMELDUNG

(11) **EP 0 578 934 A1**
(43) Veröffentlichungstag der Anmeldung: **19.01.1994**
(21) Anmeldenummer: 93106748.2
(22) Anmeldetag: 26.04.1993
(51) Int. Cl.: B05B 7/24, B05B 7/12, B23Q 11/10, F16N 7/32

(54) **Vorrichtung zum Behandeln von Werkstücken mit einem Druckfluid**

(30) Priorität: 13.07.1992 DE 4223006
(71) Anmelder: Link, Edmar, D-76228 Karlsruhe (DE)
(72) Erfinder: Link, Edmar, D-76228 Karlsruhe (DE)
(74) Vertreter: Liesegang, Roland, Dr.-Ing.

(57) **Zusammenfassung**

Vorrichtung zum Behandeln von Werkstücken mit einem Druckfluid, die mindestens einen Betätigungskopf (10) mit einer Ausströmöffnung (13) zum Ausgeben eines Druckfluidstromes aufweist, mit einem in der Ausströmöffnung mündenden Druckgaskanal (18) und einer ersten Betätigungsvorrichtung (20) zum Öffnen und Schließen des Druckgaskanales (18), einer in der Ausströmöffnung mündenden Flüssigkeitsleitung (17) und einer zweiten Betätigungsvorrichtung (15) zum Öffnen und Schließen der Flüssigkeitsleitung (17), wobei die erste Betätigungsvorrichtung (20) unabhängig von der zweiten Betätigungsvorrichtung (15) betätigbar ist, und die Flüssigkeitsleitung (17) von einem Kapillarschlauch aus Kunststoff mit einem Innendurchmesser zwischen 0,1 und 2 mm, vorzugsweise zwischen 0,3 und 1 mm, gebildet ist, um einen Druckfluidstrom in Form eines variablen Gemisches mit zwischen 0 % und 100 % variierendem Gas- bzw. Flüssigkeitsanteil auszugeben.

## Beschreibung

Die Erfindung betrifft eine Vorrichtung zum Behandeln von Werkstücken mit einem Druckfluid nach dem Oberbegriff von Patentanspruch 1.

Werkstücke werden nach ihrer Bearbeitung, beispielsweise durch Bohren, Fräsen, Schleifen oder dergleichen, und/oder vor ihrer Weiterverarbeitung, wenn sie beispielsweise verschraubt, verklebt, lackiert oder auf andere Weise bearbeitet werden sollen, in der Regel mit Druckluft abgeblasen, um sie von Spänen, Staub oder anderen Verunreinigungen zu befreien. Druckluft-Blaspistolen finden in Reparaturwerkstätten, Fertigungsanlagen, an Monatagebahnen etc. einen weitverbreiteten Einsatz, weil Druckluft ein billiges, allgemein leicht zugängliches und ungefährliches Reinigungsmittel ist, das auch verdeckte und schwer zugängliche Stellen erreicht.

Bekannte Druckluftpistolen weisen in der Regel einen Betätigungskopf mit einer Ausströmöffnung, einen an der Ausströmöffnung mündenden Druckluftkanal und eine Betätigungsvorrichtung zum Öffnen und Schließen des Luftkanals auf.

Nach dem Abblasen mit einer solchen Druckluftpistole soll das Werkstück häufig weiterbehandelt werden. Beispielsweise soll zum Lösen von Fetten und anderen Schmutzresten ein Lösungsmittel aufgebracht werden, oder das Werkstück soll vor seiner Weiterverarbeitung mit einen Rostschutzmittel, einem Rostlösemittel, einem Gleitmittel, einem Öl oder dergleichen behandelt werden. Zu diesen Zwecken muß bei herkömmlichen Einrichtungen die Druckluftpistole aus der Hand gelegt werden, und das gewünschte Mittel wird in einem nachfolgenden Arbeitsschritt separat aufgebracht. Dazu werden, insbesondere in kleineren und mittleren Betrieben, häufig Sprühdosen mit den entsprechenden Mitteln verwendet.

Die DE-PS 917 895 beschreibt eine kombinierte Ölspritz- und Luftblaspistole, die einerseits mit einem Auslöseknopf als Luftblaspistole betrieben werden kann und andererseits bei Betätigung eines Zughebels gleichzeitig Öl und Luft versprühen kann. Gemäß dieser Druckschrift ist weiterhin vorgesehen, daß die Druckluftzuführung in einen Ölvorratsbehälter geführt und das unter Druck stehende Öl über ein Nadelventil von der Pistole abgegeben wird.

Der Erfindung liegt die Aufgabe zugrunde, eine einheitliche Vorrichtung zum Behandeln von Werkstücken zu schaffen, mit der wahlweise Druckluft oder ein Gemisch aus Gas und Flüssigkeit in gewünschter Reihenfolge in beliebigem Mischungsverhältnis ausgebracht werden können. Die erfindungsgemäße Vorrichtung soll einfach in der Handhabung sein und dabei ein genau einstellbar dosiertes Gemisch aus Gas und Flüssigkeit abgeben können. Ferner soll eine Vorrichtung geschaffen werden, die wahlweise auch unabhängig vom Gasstrom nur Flüssigkeit abgeben kann. Diese Aufgabe wird erfindungsgemäß durch eine Vorrichtung nach Patentanspruch 1 gelöst.

Mit der erfindungsgemäßen Vorrichtung kann wie gewohnt zunächst das Werkstück mit Druckgas (Druckluft) abgeblasen werden. Ferner ist es möglich, bei gleichzeitigem Öffnen des Druckgaskanales und der Flüssigkeitsleitung an der Ausströmöffnung ein Gemisch aus Flüssigkeit und Gas abzugeben und je nach Ausbildung einer Düsenanordnung zu zerstäuben, wodurch die Flüssigkeit besonders gut auf dem Werkstück verteilt wird. Schließlich kann auch ausschließlich mit Druckgas (Druckluft) gearbeitet werden; dies alles mit einer einzigen, einheitlichen Vorrichtung nach Art einer Druckluft-Blaspistole.

Die Erfindung sieht vor, als Flüssigkeitsleitungen Kapillarschläuche zu verwenden, mit denen eine sehr genaue Dosierung des Flüssigkeitsstromes einfach dadurch erzielt werden kann, daß der Druck über dem Flüssigkeitspegel in einem Flüssigkeits-Vorratsbehälter eingestellt wird. Durch die Verwendung der Kapillarschläuche ist es auch ohne weiteres möglich, mehrere Druckluft-Flüssigkeits-Pistolen an einen einzigen Vorratsbehälter anzuschliessen, ohne daß eine besondere Einrichtung zum Einstellen des Flüssigkeitsstromes für jede Pistole notwendig wäre.

Gemäß einer bevorzugten Ausführungsform der Erfindung sind die erste und die zweite Betätigungsvorrichtung vollständig unabhängig voneinander betätigbar.

Mit einer einheitlichen Vorrichtung können wahlweise nacheinander Gas und Flüssigkeit in beliebiger Reihenfolge, Gas oder Flüssigkeit allein oder ein Gemisch aus Gas und Flüssigkeit in beliebigem Mischungsverhältnis mit einem zwischen 0 % und 100 % variierenden Gas- bzw. Flüssigkeitsanteil auf das Werkstück aufgebracht werden. Dadurch wird die Behandlung von Werkstücken und/oder deren Vorbereitung zur Weiterverarbeitung noch bequemer, effektiver und vielseitiger.

Besonders günstig bezüglich der Handhabung ist eine weitere Ausführungsform der Erfindung, bei der ein Druckgasventil und ein Flüssigkeitsventil im Betätigungskopf mit einem gemeinsamen Betätigungshebel nacheinander geöffnet und geschlossen werden, wobei der maximale Druck und das Volumen des Gas- und des Flüssigkeitsstromes direkt am Vorratsbehälter eingestellt werden können. Mit einer solchen Vorrichtung kann wahlweise ein Druckgasstrom oder ein Gemisch aus Gas und Flüssigkeit abgegeben werden, abhängig von der Stellung eines einzigen Betätigungshebels.

Ferner ist die Verwendung des nachfüllbaren Vorratsbehälters für die Flüssigkeit, sei es für Rostschutzmittel, Lösungsmittel, Öl oder ein anderes gewünschtes Medium, schon auf mittlere Sicht kostengünstiger und umweltverträglicher als der bisher übliche Einsatz von Sprühdosen.

Die Erfindung ist im folgenden anhand bevorzugter Ausführungsbeispiele, mit Bezug auf die Zeichnung mit weiteren Einzelheiten näher erläutert. Es zeigen:
- Fig. 1: eine Seitenansicht des Betätigungskopfes gemäß einer ersten Ausführungsform der Erfindung,
- Fig. 2: eine schematische Schnittdarstellung eines Teiles des Betätigungskopfes von Fig. 1,
- Fig. 3: eine teilweise geschnittene, vergrößerte Darstellung des Schieberventils des Betätigungskopfes von Fig. 1,
- Fig. 4: einen Vorratsbehälter gemäß der ersten Ausführungsform der Erfindung,
- Fig. 5: einen Vorratsbehälter gemäß einer modifizierten Ausführungsform der Erfindung und
- Fig. 6A, 6B, 6C: schematische Schnittdarstellungen des Betätigungskopfes gemäß einer zweiten Ausführungsform in verschiedenen Betriebsstellungen.

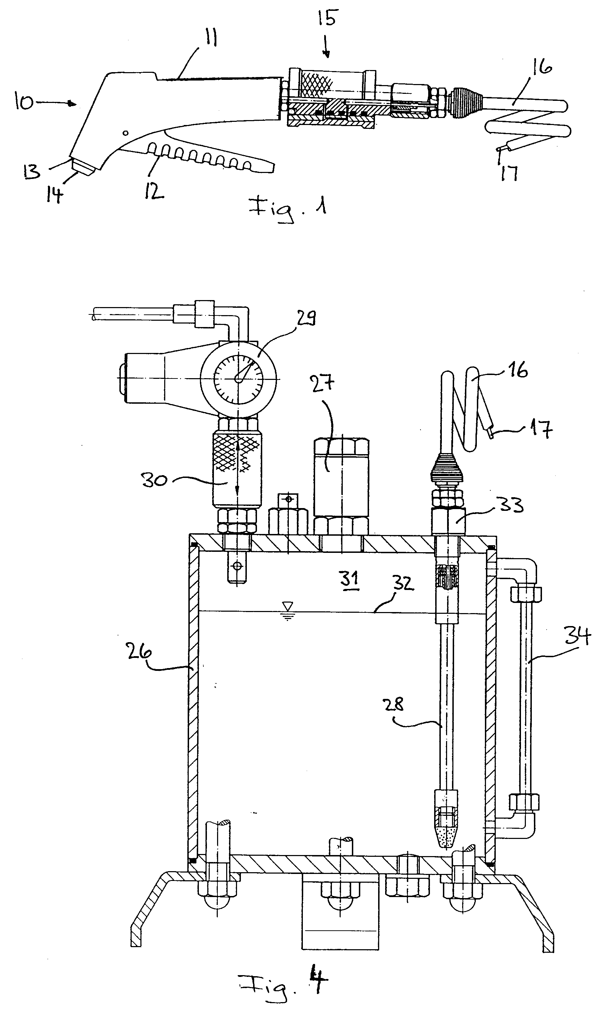

In Fig. 1 ist ein Betätigungskopf oder eine Pistole zum Abgeben von Druckluft und Flüssigkeit gemäß einer ersten Ausführungsform der Erfindung allgemein mit 10 bezeichnet. Die Pistole 10 weist ein Gehäuse 11 mit einem bei 11' schwenkbar gelagerten Betätigungshebel 12 und einer beispielsweise runden Ausströmöffnung 13 auf. In die Ausströmöffnung ist beim gezeigten Ausführungsbeispiel eine Düse 14 eingesetzt. Über ein allgemein mit 15 bezeichnetes Schieberventil sind eine flexible Gasleitung 16 und ein Kapillarschlauch 17 zum Zuführen von Flüssigkeit mit der Pistole 10 verbunden.

Die flexible Gasleitung 16 enthält in ihrem inneren Hohlraum lose den ebenfalls flexiblen Kapillarschlauch 17 für den Flüssigkeitstransport.

Der Kapillarschlauch 17 besteht bei der gezeigten Ausführung aus Kunststoff, vorzugsweise PTFE (Polytetrafluorethylen, Handelsname: Teflon). Er kann reproduzierbar mit sehr kleinen Durchmessern ausgeführt werden, so daß eine feine Flüssigkeitsdosierung reproduzierbar bewirkt werden kann. Es sind beispielsweise Innendurchmesser des Kapillarschlauches von 0,3; 0,35; 0,45; 0,7 und 1,0 mm mit hoher Genauigkeit realisierbar. Damit lassen sich abhängig vom eingessetzten Druck Förderleistungen bis herab zu 5 ml/h (Milliliter je Stunde) realisieren, d. h. sehr kleine, genau dosierte Flüssigkeitsmengen. Dies führt zu sehr kleinen Flüssigkeitsverbräuchen, die aus Gründen der Umweltschonung und (hohen) Kosten der eingesetzten Flüssigkeiten (beispielsweise Öle auf pflanzlicher Basis) höchst erwünscht sind.

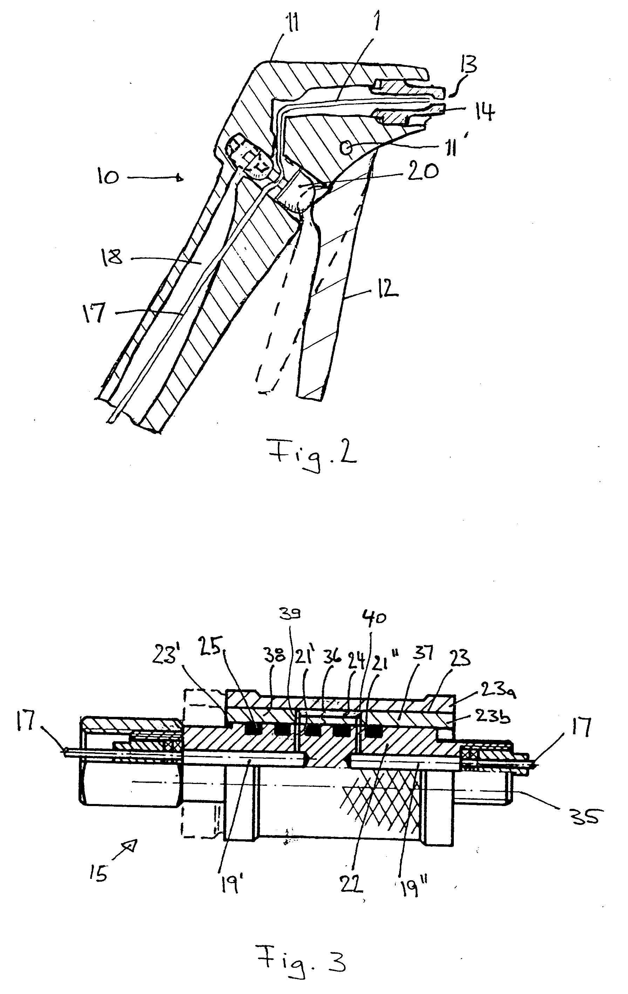

Weitere Einzelheiten der Druckluft-Flüssigkeits-Pistole 10 und des Schieberventils 15 sind in Figuren 2 und 3 gezeigt.

In Fig. 2 ist die Pistole 10 im Schnitt gezeigt. Ein Druckluftkanal 18 und die Flüssigkeitsleitung 17 führen durch den Schaft und den Lauf der Pistole zur Düse 14 in der Ausströmöffnung 13. Ein Stellventil 20 ist mittels des Betätigungshebels 12 so in einer zum Druckluftkanal quer verlaufenden Bohrung verschiebbar, daß es den Kanal stufenlos verschließen und freigeben kann. Bei der gezeigten Stellung von Betätigungshebel 12 und Stellventil 20 ist der Druckluftkanal 18 versperrt. Bei der gestrichelt dargestellten Stellung des Hebels 12 ist das Stellventil 20 in die Bohrung hineingedrückt, und der Druckluftkanal 18 ist geöffnet. Es sind jedoch auch (nicht gezeigte) Zwischenstellungen des Betätigungshebels 12 und des Stellventils 20 möglich.

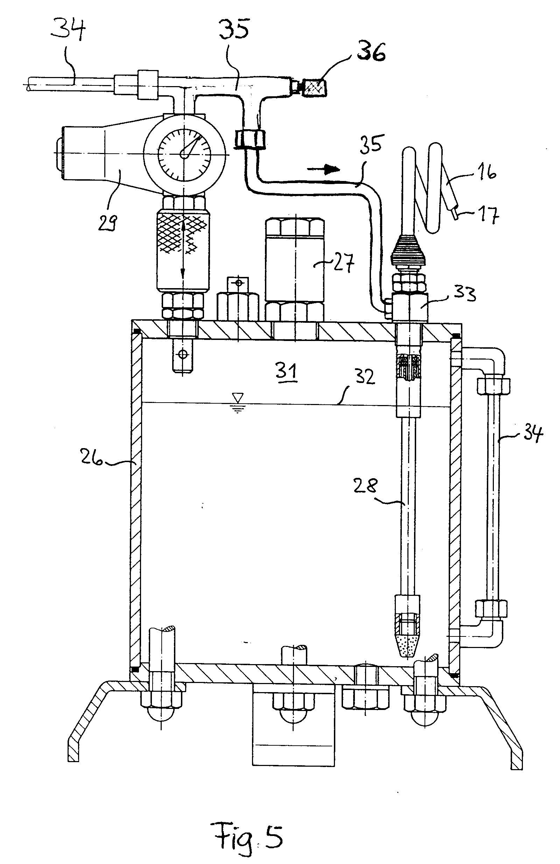

Fig. 3 zeigt eine vergrößerte Darstellung des Schieberventils 15. Dem Schieberventil wird in der Zeichung von links über den Kapillarschlauch 17 Flüssigkeit von einem in Fig. 4 gezeigten Vorratsbehälter 26 zugeführt. Der Kapillarschlauch 17 ist über eine Stopfbuchsdichtung üblicher Bauart mit Dichtscheiben in das Schieberventil 15 so eingesteckt oder -geschraubt, daß ein erster Abschnitt des Kapillarschlauches 17 in einer ersten Sackbohrung 19' eines Zentralstückes 22 mündet. Von einer zweiten Sackbohrung 19'' führt ein zweiter Abschnitt des Kapillarschlauches 17 zur Pistole 10. Die beiden koaxialen, einander gegenüberliegenden Sackbohrungen 19', 19'' stehen über zwei radiale Bohrungen 21' bzw. 21'' im Zentralstück 22 mit dem äußeren Umfang des Zentralstückes 22 in Verbindung. In einer das Zentralstück 22 umgebenden Manschette 23 ist ein Bypass-Kanal 24 mit zwei radialen Kanalstücken, die durch ein axiales Kanalstück verbunden sind, ausgebildet, dessen zwei Mündungsöffnungen am inneren Umfang der Manschette 23 münden. Die Manschette 23 mit dem Bypass-Kanal 24 weist einen Anschlag 23' auf und ist längs des Zentralstücks 22 zwischen zwei Raststellungen so verschiebbar, daß die Mündungsöffnungen des Bypass-Kanals 24 am inneren Umfang der Manschette 23 und die Mündungen der radialen Bohrungen 21', 21'' am äußeren Umfang des Zentralstückes 22 in einer ersten Stellung der Manschette 23 (durchgezogenen Linie in Fig. 3) miteinander fluchten und in einer zweiten Stellung (gestrichelte Darstellung) zueinander versetzt sind.

In Nuten des Zentralstückes 22 aufgenommene Dichtungen in Form von Quadringen 25 dichten in der durchgezogenen Stellung nach Fig. 3 die Übergangsstellen von den radialen Bohrungen 21', 21'' zum Bypass-Kanal 24 bzw. bei in Fig. 3 nach links verschobener Manschette 23 (gestrichelt) die Übergangsstellen von den radialen Bohrungen 21' ,21'' zur die Bohrungen verschließenden Manschetteninnenseite und vom Bypass-Kanal 24 zur Außenseite des Zentralstücks 22 ab. Bei der gezeigten Anordnung genügen fünf solche Quadringe 25, von denen die vier in Fig. 3 rechten Quadringe 25 die Übergangsstellen der radialen Bohrungen 21',21'' zu den Mündungsöffnungen des Bypass-Kanals 24 seitlich abdichten und die vier in Fig. 3 linken Quadringe 25 die radialen Bohrungen 21', 21'' und den Bypass-Kanal 24 bei verschobener Manschette 23 (gestrichelte Darstellung), also bei unterbrochener Flüssigkeitsleitung 17, abdichten. Die drei mittleren der fünf Dichtungen 25 haben also eine doppelte Dichtfunktion. Anstelle der Quadringe 25 können auch andere bekannte Dichtungsringe verwendet sein.

Beim gezeigten Ausführungsbeispiel ist die Manschette 23 aus einem Außenring 23a und einem Innenring 23b zusammengesetzt. Der Innenring weist einen mittleren Einstich 36 auf. Beidseits des mittleren Einstichs 36 sind Paßabschnitte 37 bzw. 38 angeordnet. An den Übergängen zwischen dem mittleren Einstich 36 und den seitlichen Paßabschnitten 37 bzw. 38 sind radiale Bohrungen 39 bzw. 40 nach innen geführt. Diese Bohrungen 39, 40 bilden zusammen mit dem Einstich 36 den Bypass-Kanal 24.

Zumindest im Bereich des Schieberventils sind die Flüssigkeitsleitung 17 und die Druckgasleitung nicht miteinander koaxial. Vielmehr ist längs einer Achse 35 im Schieberventil 15 ein von der Flüssigkeitsleitung 17 getrennter, paralleler Durchgang (durch Achse 35 angedeutet) für Druckluft vorgesehen.

Die Flüssigkeits- und Druckluftzufuhr wird über einen in Fig. 4 gezeigten Vorrats-Flüssigkeitsbehälter 26 gesteuert.

Der Flüssigkeitsbehälter 26 ist über eine Füllschraube 27 mit Rückflußverhinderer mit einer Flüssigkeit, wie einem Lösungsmittel, einem Rostschutzmittel, einem Gleitmittel oder dgl., befüllbar. Die Flüssigkeit wird über ein Steigrohr 28 vom Boden des Flüssigkeitsbehälters 26 her herausgeführt. Dabei steht die Flüssigkeit unter den Druck des Gases (Luft), das von einer Druckquelle mit einem üblichen Speisedruck zwischen 1 und 8 bar über ein Druckminderventil 29, welches eine feinfühlige Druckregelung gestattet, und ein 3/2-Wegeventil 30, welches handbetätigt oder als Magnetventil oder als pneumatisches Ventil ausgeführt sein kann, in einen Gasraum 31 oberhalb des Flüssigkeitsspiegels 32 der Flüssigkeit im Vorratsbehälter 26 unter einen Druck zwischen 0,5 bis 7 bar eingeleitet wird.

Die Flüssigkeit gelangt zu der Flüssigkeitsleitung 17 über das Steigrohr 28 und ein Adapterstück 33. Aufgrund der kapillaren Wirkung der Flüssigkeitsleitung 17 ist die zu fördernde Flüssigkeitsmenge über den Druck des Gases mit hoher Genauigkeit einstellbar.

Gas (Luft) wird aus dem Gasraum 31 über dieses Adapterstück 33 abgeführt und in die die Flüssigkeitsleitung 17 umgebende Gasleitung 16 eingespeist. Der Gasdruck in der Gasleitung 16 entspricht also im wesentlichen dem Überdruck im Gasraum 31.

Außen am Flüssigkeitsbehälter 26 ist eine Sichtkontrolle 34 angebracht, um den momentanen Flüssigkeitsstand im Behälter kenntlich zu machen.

Selbstverständlich können statt des einen Kapillarschlauches 17 auch zwei oder mehr solche Schläuche zum Flüssigkeitstransport vorgesehen sein, je nachdem, wieviele Betätigungsköpfe zum Behandeln von Werkstücken erforderlich sind. (Zu jedem Betätigungskopf 10 gehört ein von einer Gasleitung 16 umgebener Kapillarschlauch 17 mit einem Adapterstück 33 und einem Steigrohr 28).

Fig. 5 zeigt eine alternative Ausführungsform des Flüssigkeits-Vorratsbehälters. Dieser unterscheidet sich von dem in Fig. 4 gezeigten Aufbau dadurch, daß die Druckgaszuführung 34 einerseits zu dem Druckmindererventil 29 und andererseits zu einer Bypass-Gasleitung 35 verzweigt. In der Bypass-Gasleitung 35 ist ein einstellbares Drosselventil 36 vorgesehen, um den maximalen Druck des der Gasleitung 16 unmittelbar zugeführten Druckgases unabhängig von dem Gasdruck im Vorratsbehälter 26 einzustellen. Die anderen Bestandteile des Vorratsbehälters von Fig. 5 entsprechen denen von Fig. 4.

Die in Fig. 5 gezeigte Modifikation des Vorratsbehälters 26 für die Flüssigkeit ist insbesondere bei solchen Anwendungen vorteilhaft, bei denen ein sehr kleiner, präzise dosierter Flüssigkeitsstrom, beispielsweise 5 ml/h, abgegeben werden soll, d.h., der Druck im Gasraum 31 über dem Flüssigkeitspegel 32 entsprechend niedrig eingestellt ist, und gleichzeitig ein hoher Luftanteil im Flüssigkeits-Gas-Gemisch gewünscht ist oder ein starker reiner Luftstrom von der Pistole abgegeben werden soll.

Die erfindungsgemäße Vorrichtung gemäß der ersten Ausführungsform wird wie folgt betrieben.

Zum einfachen Abblasen von Werkstücken ist die Manschette 23 des Schieberventils 15 in die gestrichelt gezeichnete Raststellung verschoben, und der Flüssigkeitskanal 19 ist unterbrochen. Die Pistole 10 kann dann wie eine gewöhnliche Blas-Druckluftpistole verwendet werden, bei der durch Betätigen des Hebels 12 der Durchflußstrom der Druckluft in Stufen oder stufenlos einstellbar ist. Der maximale Luftdruck ist über das Druckminderventil 29 einstellbar. Durch Einsetzen einer entsprechenden Düse 14 in die Ausströmöffnung 13 nimmt der Druckluftstrom eine gewünschte Form an.

Wenn nun nach dem Abblasen eine Flüssigkeit, wie ein Lösungsmittel oder ein Rostschutzmittel, auf das Werkstück aufgebracht werden soll, wird der Druckluftstrom unterbrochen (durchgezogen gezeichnete Stellung von Hebel 12 und Ventil 20 in Fig. 2), und das Schieberventil 15 wird freigegeben. Dazu wird die Manschette 23 in die in Fig. 3 durchgezogen gezeigte Raststellung gebracht, um den unterbrochenen Flüssigkeitskanal 19 zu verbinden. Die Flüssigkeit steigt nun aufgrund des Gasdrucks in Gasraum 31 über dem Flüssigkeitspegel 32 durch das Steigrohr 28 in den Kapillarschlauch 17 und strömt durch diesen zur Ausströmöffnung 13 der Pistole 10. Das Ende des Kapillarschlauches 17, der an der Ausströmöffnung mündet, liegt bei der gezeigten Ausgestaltung lose im Gaskanal 18 und wird durch den umgebenden Gasstrom in seiner im wesentlichen zur Ausströmöffnung 13 zentrierten Position gehalten. Es können jedoch auch Halterungen zum Positionieren des Flüssigkeitskanales in der Pistole 11 vorgesehen sein.

Abhängig vom Gasdruck über dem Flüssigkeitspegel 32 ist die Durchflußmenge der Flüssigkeit einstellbar. Je nach Einstellung tritt die Flüssigkeit aus der Ausströmöffnung tropfenförmig oder in einem feinen Strahl aus und benetzt das Werkstück.

Um die aufzubringende Flüssigkeit auf dem Werkstück besser zu verteilen, kann gleichzeitig durch Betätigen des Hebels 12 Druckluft zugesetzt werden, die ausströmende Flüssigkeit umgibt und zerstäubt. Auf diese Weise kann ein Druckfluidstrom als ein variables Gemisch mit einem Gas- oder Flüssigkeitsanteil jeweils zwischen 0 % und 100 % ausgegeben werden.

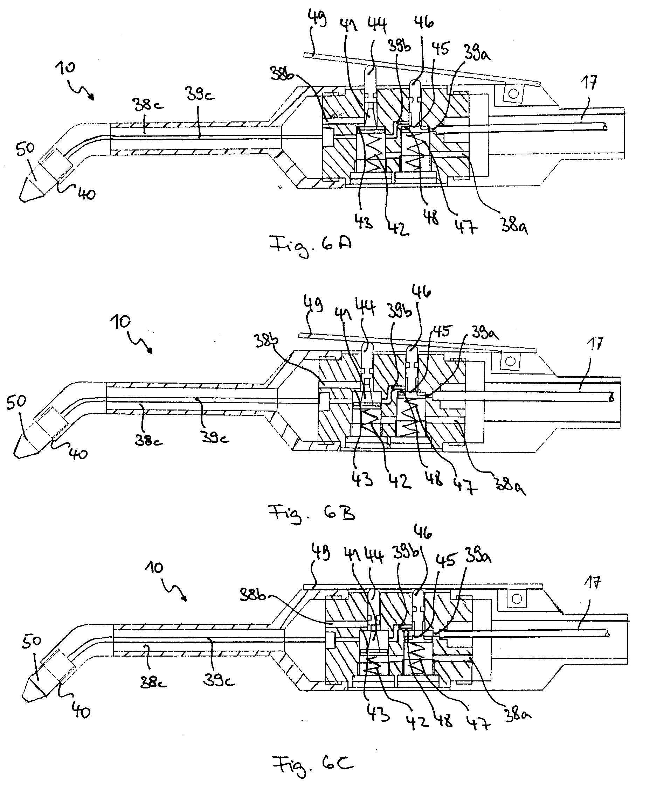

Fig. 6A bis 6C zeigen eine weitere Ausführungsform des erfindungsgemäßen Betätigungskopfes in drei Betriebsstellungen.

Der allgemein mit 10 bezeichnete Betätigungskopf ist über ein nicht gezeigtes Adapterstück an die Gasleitung 16 und die innerhalb der Gasleitung verlaufende kapillare Flüssigkeitsleitung 17 anschließbar. Der Betätigungskopf 10 ist von einem Gaskanal 38a, 38b, 38c durchsetzt. Eine kapillare Flüssigkeitsleitung 39a, 39b, 39c führt vom Adapterstück zur Mündung 40 des Betätigungskopfes 10. In den Gaskanal 38a, 38b ist ein Gasventil 41 mit einem Ventilkegel eingesetzt, der von einer Feder 42 gegen einen Ventilsitz 43 gedrückt wird und den Gaskanal 38a, 38b verschließt. Über einen Auslöseknopf 44, der aus dem Betätigungskopf 10 herausragt und mit dem Gasventil 41 in Verbindung steht kann der Ventilkegel gegen die Federkraft aus dem Ventilsitz 43 herausgedrückt werden, um den Gaskanal 38a, 38b zu öffnen. Ein Flüssigkeitsventil 45, das ähnlich wie das Gasventil 41 aufgebaut ist und arbeitet, ist in die Flüssigkeitsleitung 39a, 39b eingefügt, um diese über einen mit dem Flüssigkeitsventil 45 verbundenen Auslöseknopf 46 zu öffnen und zu schließen. Hierzu weist das Flüssigkeitsventil einen Ventilkörper auf, der von einer Feder 47 gegen einen Ventilsitz 48 gedrückt wird und die Flüssigkeitsleitung verschließt. Die Ventilkörper 41, 45 der beiden Ventile sind mittels Quad-Ringen oder O-Ringen gegen den Ventilsitz abgedichtet. Wenn die Ventile geöffnet sind, kann das Gas bzw. die Flüssigkeit den jeweiligen Ventilkörper 41, 45 frei umströmen und vom Kanalabschnitt 38a bzw. 39a in den Kanalabschnitt 39a bzw. 39b fließen.

Über einen an der Außenseite des Betätigungskopfes 10 angelenkten, über den Auslöseknöpfen 44, 46 liegenden Auslösehebel 49 können nacheinander das Gasventil 41 und das Flüssigkeitsventil 45 geöffnet und geschlossen werden. In Fig. 6a sind beide Ventile geschlossen dargestellt. Zunächst drückt der Hebel den weiter aus dem Betätigungskopf herausragenden Auslöseknopf 44 des Gasventils 41 nach innen (Fig. 6B) und dann den Auslöseknopf 46 des Flüssigkeitsventils (Fig. 6C). D.h. mit dieser Ausführungsform der Pistole kann entweder ein Druckgasstrom oder ein Gemisch aus Druckgas und Flüssigkeit abgegeben werden. Diese alternative Verwendungsmöglichkeit entspricht in der Regel den tatsächlichen Bedürfnissen beim Einsatz der erfindungsgemäßen Vorrichtung zum Schmieren, Kühlen oder anderweitigen Behandeln von Werkstücken, wobei besonders vorteilhaft ist, daß die verschiedenen Funktionen über einen einzigen Auslösehebel gesteuert werden können.

Bei geöffneten Ventilen 41, 45 kann die Flüssigkeit bzw. das Gas frei durch die kapillare Flüssigkeitsleitung 39c bzw. den diese Flüssigkeitsleitung 39c umgebenden Gaskanal 38c zur Mündung 40 strömen. Bei der gezeigten Ausführungsform des Betätigungskopfes ist dar Ventilkörper des Gasventiles 41 kegelstumpfförmig ausgebildet, um das Volumes des von der Pistole abzugebenden Gasstromes manuell steuern zu können. Das Flüssigkeitsventil 45 dagegen verschließt oder öffnet die Flüssigkeitsleitung 38 vollständig, weil der Volumenstrom in der kapillaren Leitung allein über den Gasdruck über dem Flüssigkeitspegel im Vorratsbehälter hochgenau eingestellt werden kann und eingestellt werden soll.

In die Mündung des Betätigungskopfes 10 kann eine einfache Düse 50, eine Düse für Flüssigkeit, die von einem ringförmigen Luftaustrittskanal umgeben ist oder dergleichen eingesetzt sein. Besonders vorteilhaft ist die Verwendung einer Düsenanordnung, wie sie in der EP 91 120 980.7 beschrieben ist.

## Patentansprüche

1. Vorrichtung zum Behandeln von Werkstücken mit einem Druckfluid, die mindestens einen Betätigungskopf (10) mit einer Ausströmöffnung (13;40) zum Ausgeben eines Druckfluidstromes aufweist, mit einem in der Ausströmöffnung mündenden Druckgaskanal (18;38) und einer ersten Betätigungsvorrichtung (12,20;41,49) zum Öffnen und Schließen des Druckgaskanales (18;38), einer in der Ausströmöffnung (13;40) mündenden Flüssigkeitsleitung (17;39) und einer zweiten Betätigungsvorrichtung (15;45,49) zum Öffnen und Schließen der Flüssigkeitsleitung (17;39), dadurch **gekennzeichnet**, daß die erste Betätigungsvorrichtung unabhängig von der zweiten Betätigungsvorrichtung betätigbar ist und daß die Flüssigkeitsleitung (17;39) von einem Kapillarschlauch aus Kunststoff mit einem Innendurchmesser zwischen 0,1 und 2 mm, vorzugsweise zwischen 0,3 und 1 mm, gebildet ist, um einen Druckfluidstrom in Form eines variablen Gemisches mit zwischen 0 % und 100 % variierendem Gas- bzw. Flüssigkeitsanteil auszugeben.

2. Vorrichtung nach Anspruch 1, dadurch **gekennzeichnet,** daß der Druckgaskanal (18;38) über eine Gasleitung (16) mit einer einstellbaren Druckgasquelle und die Flüssigkeitsleitung (17;39) mit einem als Druckflüssigkeitsquelle dienenden Flüssigkeits-Vorratsbehälter (26) verbunden sind.

3. Vorrichtung nach Anspruch 2, dadurch **gekennzeichnet,** daß die Druckgasquelle mit einem Gasraum (31) über einem Flüssigkeitsspiegel (32) im Vorratsbehälter (26) in Verbindung steht.

4. Vorrichtung nach Anspruch 3, dadurch **gekennzeichnet,** daß der Gasdruck in der Gasleitung (16) und der Gasdruck im Gasraum (13) des Vorratsbehälters (26) unabhängig voneinander einstellbar sind.

5. Vorrichtung nach Anspruch 3, dadurch **gekennzeichnet,** daß die Gasleitung (16) im Gasraum des Vorratsbehälters (26) mündet, wobei der Gasdruck in der Gasleitung (16) durch den Gasdruck im Vorratsbehälters (26) bestimmt ist.

6. Vorrichtung nach einem der vorangehenden Ansprüche, dadurch **gekennzeichnet,** daß die erste Betätigungsvorrichtung ein Druckgasventil (41) und die zweite Betätigungsvorrichtung ein Flüssigkeitsventil (45) im Betätigungskopf (10) aufweisen und daß ein gemeinsamer Betätigungshebel (49) für die beiden Ventile vorgesehen ist, der das Druckgasventil (41) und das Flüssigkeitsventil (45) nacheinander öffnet und schließt.

7. Vorrichtung nach einem der vorangehenden Ansprüche 1 bis 5, dadurch **gekennzeichnet,** daß in die Flüssigkeitsleitung (17) ein Schieberventil (15) eingeschaltet ist, welches den Flüssigkeitsstrom in einer ersten Stellung unterbricht und in einer zweiten Stellung freigibt, und daß im Betätigungskopf ein unabhängig von dem Schieberventil betätigbares Druckgasventil vorgesehen ist.

8. Vorrichtung nach einem der vorangehenden Ansprüche, dadurch **gekennzeichnet,** daß die Flüssigkeitsleitung (39) und der Druckgaskanal (38) an der Ausströmöffnung (40) in einer Düsenanordnung (50) mit einer Mischkammer für Gas und Flüssigkeit und mit von der Mischkammer getrennten Gaskanälen münden.

9. Vorrichtung nach einem der vorangehenden Ansprüche, dadurch **gekennzeichnet,** daß die Flüssigkeit ein Lösungsmittel, ein Rostschutzmittel, ein Gleitmittel oder ein ähnliches Mittel zum Behandeln von Werkstücken ist und daß als Druckgas Druckluft verwendet ist.

10. Vorrichtung nach einem der vorangehenden Ansprüche, dadurch **gekennzeichnet,** daß dem Betätigungskopf (10) eine Schlauchanordnung zugeordnet ist, bei der eine flexible Flüssigkeitsleitung (17) innerhalb einer flexiblen Druckgasleitung (16) verläuft.
